# EUROPÄISCHE PATENTSCHRIFT

(11) **EP 0 349 660 B1**
(45) Veröffentlichungstag und Bekanntmachung des Hinweises auf die Patenterteilung: **06.10.1993**
(21) Anmeldenummer: 88110617.3
(22) Anmeldetag: 02.07.1988
(51) Int. Cl.: H04N 5/60, H04N 9/64

(54) **Frequenzumsetzungsschaltung für einen Farbfernsehkanal**
Frequency conversion circuit for a television channel
Circuit de conversion de fréquence pour un canal de télévision

(43) Veröffentlichungstag der Anmeldung: 10.01.1990
(73) Patentinhaber: Deutsche ITT Industries GmbH, 79108 Freiburg (DE)
(72) Erfinder: Ehrhardt, Dietmar, Dr.-Ing., D-7800 Freiburg-Hochdorf (DE)

(56) Entgegenhaltungen:
- EP-A- 0 180 339
- EP-A- 0 213 222

## Beschreibung

Die Erfindung betrifft eine Frequenzumsetzungsschaltung für einen Farbfernsehkanal, dessen Signal als hochfrequentes Antennen- oder Kabelsignal empfangen wird und der einen Videokanal sowie mindestens einen, frequenzmäßig vom Videokanal getrennten Tonkanal umfaßt, wobei der Videokanal je nach dem Farbfernsehstandard, z.B. PAL oder NTSC, das normgemäße Farb-Bild-Austast-Synchron-Signalgemisch (=FBAS-Signal) und bei zwei Tonkanälen diese den frequenzmodulierten Fernseh-Stereoton nach einer der europäischen Stereo-Standards enthalten, während z.B. in den USA bereits ein Tonkanal das Stereosignal enthalten kann.

Die übliche Frequenzumsetzung in Farbfernsehempfängern erfolgt mittels eines Tuners, der den zu empfangenden Farbfernsehkanal in einen festen Zwischenfrequenzbereich von ca. 33 MHz bis 40 MHz umsetzt, von dem aus die Umsetzung der verschiedenen Signalanteile in das Basisband erfolgt.

Neben dieser üblichen Zwischenfrequenzumsetzung gibt es auch ein Verfahren, das unter dem Begriff Tief- oder Null-Zwischenfrequenzumsetzung bekannt ist, bei dem das hochfrequente Signal unter Umgehung der Zwischenfrequenzumsetzung direkt in das Basisband oder ein sehr tiefes Frequenzband umgesetzt wird. Dabei wird das Hochfrequenzsignal mit einem Quadratursignalpaar, dessen Frequenz eine Festfrequenz im Bereich des Hochfrequenzsignals ist, umgesetzt, so daß als Mischungssignal ebenfalls ein Quadratur-Signalpaar in der tiefen Frequenzlage entsteht. Nach verschiedenen aus der Einseitenbandtechnik bekannten Methoden, z.B. der Phasen- oder der "Dritten" Methode, kann aus diesem Quadratur-Signalpaar das gewünschte Seitenband in Basisbandlage isoliert werden.

Diese Trennung erfolgt bekanntlich durch Addition oder Subtraktion des modifizierten Quadratur-Signalpaares mittels einer entsprechenden Koppelschaltung. Bei der Phasenmethode wird vor dieser Koppelschaltung ein Signal des Quadratur-Signalpaares um 90° in der Phase gedreht und bei der Dritten Methode wird das Quadratur-Signalpaar einer zweiten Quadratur-Umsetzung unterworfen. Zur Trennung von Nachbarsignalen sind in beiden Fällen lediglich Tiefpaßfilter erforderlich, denen das gekoppelte Signal zugeführt wird.

Bei Farbfernsehsignalen ist eine derartige direkte Frequenzumsetzung kritisch, weil Unsymmetrien und Phasenfehler im Quadratur-Signalpfad ein störendes Moirée auf dem Fernsehbildschirm erzeugen. Dies ist insbesondere durch den hohen Bildträgeranteil im Hochfrequenzsignal bedingt, weil dieser bei der Einseitenbandumsetzung in der Regel nicht vollständig unterdrückt wird und somit als Störsignal mit fester Frequenz innerhalb des Videosignals bei der Bildwiedergabe sichtbar wird. Eine gewisse Abhilfe schafft hierbei die digitale Signalverarbeitung, wobei die Digitalisierung im Signalpfad so früh wie möglich erfolgen sollte, denn alterungs-, temperatur-, einstellungs- und störungsbedingte Änderungen des Quadratursignalpfads lassen sich dann weitgehend verhindern. Ferner lassen sich genau definierte Filterschaltungen digital realisieren, die in analoger Form ohne Abgleichmaßnahmen kaum möglich wären.

Eine derartige Frequenzumsetzungsschaltung für Farbfernsehsignale einschließlich der mitübertragenen Tonkanäle ist in EP-A-0 213 222 (= US-A-47 10 814 = ITT-case G.G. Gassmann 118-18-14-5-3-2) beschrieben. In der dortigen Fig. 2 ist ein Tief-Zwischenfrequenz-Umsetzer dargestellt, dessen in Quadratur stehende Ausgangssignale mittels zweier Analog-Digital-Umsetzer digitalisiert und der Videosignalverarbeitungsschaltung zugeführt sind, die als Ausgangssignal das digitalisierte FBAS-Signal erzeugt. Ferner ist das digitalisierte Quadratur-Signalpaar über eine Kombinationsstufe der Tonverarbeitungsstufe zugeführt, die die zwei Tonkanäle in eine tiefe Frequenzlage umsetzt und voneinander trennt. Die Frequenz des lokalen Oszillators liegt etwa in der Mitte zwischen dem senderfrequenten Bildträger und dem senderfrequenten Farbträger, wodurch im Videosignal durch den restlichen Bildträger ein sichtbares Störsignal bei 4,4 MHz gebildet wird.

Es ist daher Aufgabe der in den Ansprüchen gekennzeichneten Erfindung, eine verbesserte Frequenzumsetzungsschaltung für einen Farbfernsehkanal anzugeben, welche die Störsignale bei der Bildwiedergabe weiter unterdrückt. Ferner sollen durch eine Weiterbildung der Erfindung, zwei Tonkanäle, falls vorhanden, möglichst einfach getrennt werden können.

Die Erfindung geht von dem Gedanken aus, einmal mittels einer Korrekturstufe das digitalisierte Quadratur-Signalpaar möglichst von allen Quadratur-Signalfehlern zu befreien und zum anderen das durch den restlichen Bildträger bedingte Störsignal in den signalfreien Frequenzbereich zwischen den Video- und den Tonkanal bzw. den ersten Tonkanal zu legen, wobei mittels zusätzlicher Filtermittel dieses resultierende Störsignal selektiv unterdrückbar ist.

Die Erfindung und vorteilhafte Weiterbildungen werden anhand der Figuren der Zeichnung näher erläutert:
Fig. 1 zeigt schematisch als Blockschaltbild ein Ausführungsbeispiel der Frequenzumsetzungsschaltung nach der Erfindung,
Fig. 2a und 2b zeigen das Frequenzschema eines hochfrequent übertragenen Fernsehkanals,
Fig. 3 zeigt das Frequenzschema des analogen oder digitalen Quadratur-Signalpaares nach dem Tief-Zwischenfrequenz-Umsetzer,
Fig. 4 zeigt das Frequenzschema des FBAS-Signals mit Störsignal nach dem Video-Demodulator,
Fig. 5 zeigt schematisch als Blockschaltbild ein Ausführungsbeispiel einer Ton-Umsetzungsstufe und
Fig. 6 zeigt als Blockschaltbild ein Ausführungsbeispiel der Korrekturstufe.

Alle Figuren beziehen sich auf den PAL-Standard mit Stereo-Tonkanälen nach europäischem Fernseh-Stereoton-Standard. Falls nur ein Tonkanal, wie z.B. in den USA, gesendet wird, können die durch den zweiten Tonkanal bedingten Teilschaltungen entfallen.

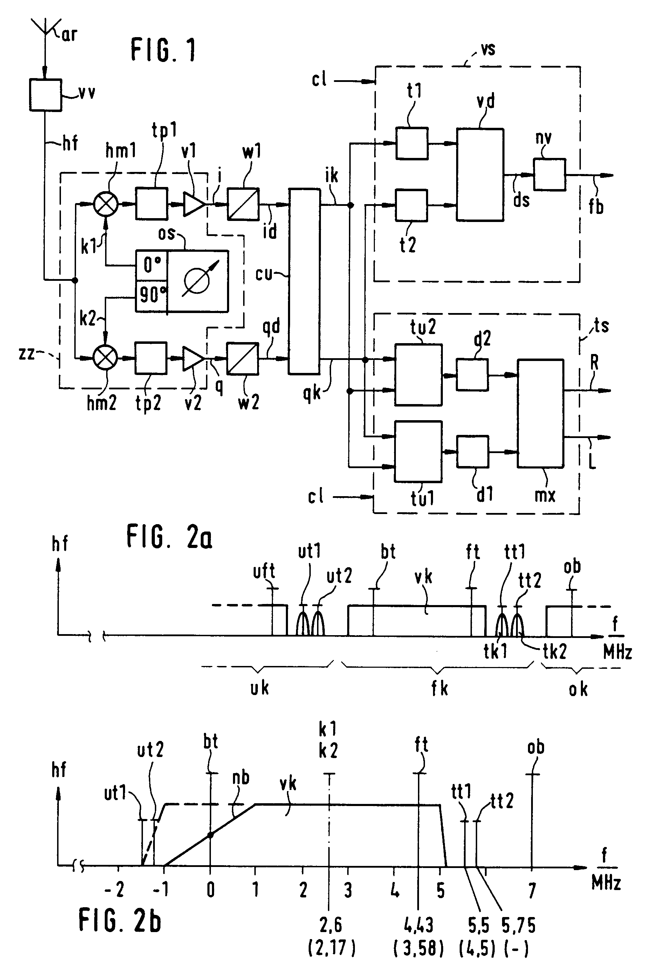

Im schematischen Blockschaltbild nach Fig. 1 ist die Antenne ar, die den hochfrequent übertragenen Fernsehkanal fk empfängt, an den Eingang des Vorverstärkers vv angeschlossen, der eine grobe Vorselektion mittels eines internen Bandpasses bewirkt und der ferner das Antennensignal in seinem Pegel anhebt und als Hochfrequenzsignal hf dem nachfolgenden Tief-Zwischenfrequenz-Umsetzer zz zuführt.

Im Tief-Zwischenfrequenz-Umsetzer zz findet die Umsetzung des im Hochfrequenzsignal hf enthaltenen Fernsehkanals fk in das Basisband oder in ein tiefes Frequenzband statt. Dies erfolgt mittels des vom lokalen Oszillator os erzeugten ersten bzw. zweiten Konversionssignals k1, k2, das auf den Mischungseingang des ersten bzw. zweiten Hochfrequenmischers hm1, hm2 geschaltet ist, deren jeweiliger Signaleingang mit dem Hochfrequenzsignal hf gespeist ist. Die beiden Konversionssignale k1, k2 stehen zueinander in Quadratur, wobei für die weiteren Betrachtungen das erste Konversionssignal k1 als kosinus- und das zweite Konversionssignal k2 als sinusförmiges Signal angenommen ist. Der erste bzw. zweite Hochfrequenzmischer hm1, hm2 bildet somit den Anfang des Inphase- bzw. des Quadratur-Signalpfades für den heruntergemischten Fernsehkanal.

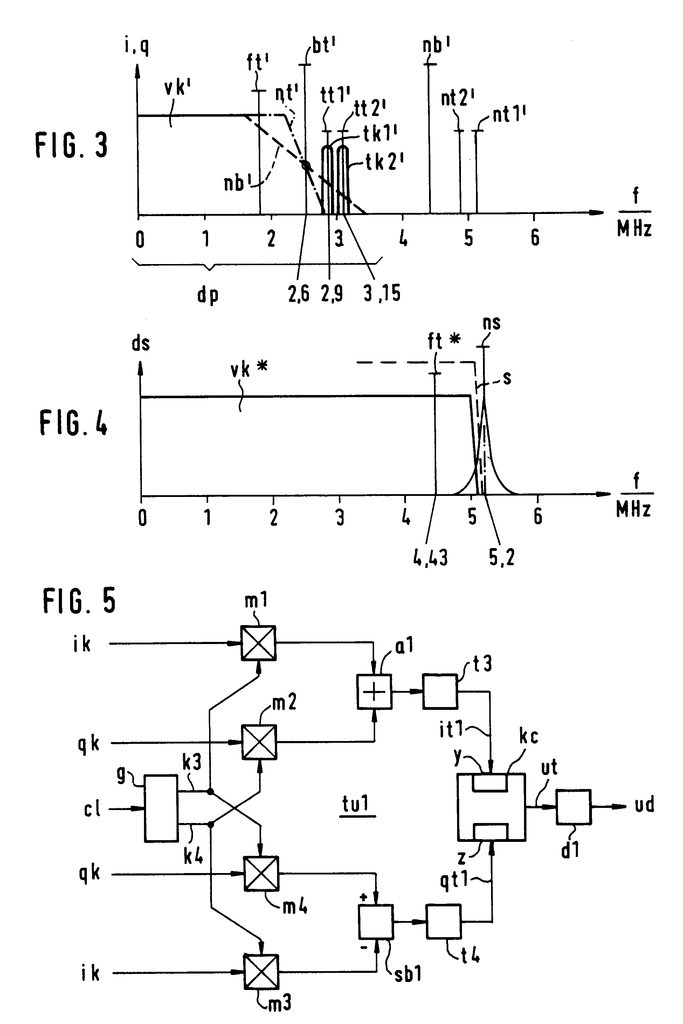

Dem ersten bzw. dem zweiten Hochfrequenzmischer hm1, hm2 ist der erste bzw. der zweite analoge Tiefpaß tp1, tp2 nachgeschaltet, an den sich ferner der erste bzw. der zweite Analogverstärker v1, v2 anschließt. Der nur grob zu definierende Durchlaßbereich dieser beiden analogen Tiefpässe ist dabei etwas größer als die halbe Bandbreite des hochfrequent übertragenen Fernsehkanals fk. In Fig. 4 wird dies anhand des eingezeichneten Durchlaßbereiches dp verdeutlicht. Die eigentliche Filterung mit genau definierten Selektionsflanken erfolgt erst nach der Digitalisierung mit digitalen Tiefpässen in der Video-Stufe vs und in der Ton-Umsetzungsstufe ts.

Die Frequenz des lokalen Oszillators os, und damit der beiden Konversionssignale k1, k2, liegt im angenommenen Beispiel beim PAL-Farbfernsehstandard 2,6 MHz über der Frequenz des jeweiligen Bildträgers bt, vgl. Fig. 2b. Die Bemessung dieser Frequenz ergibt sich aus der Annahme einer fiktiven Frequenz, die in der Mitte zwischen der oberen Norm-Bandgrenze des Videokanals fk bei etwa 5 MHz und der unteren Norm-Bandgrenze des ersten Tonkanals tk1 bei etwa 5,4 MHz liegt. Der Abstand dieser fiktiven Frequenz vom jeweils zugehörigen Bildträger bt ist durch die Zahl 2 zu dividieren. Das Ergebnis stellt den Frequenzoffset des lokalen Oszillators os bezüglich des jeweiligen Bildträgers bt dar. Beim NTSC-Farbfernsehstandard ergibt sich aus dieser Bemessungsregel ein Frequenzoffsetwert von 2,17 MHz für den lokalen Oszillator, vgl. Fig. 2b.

Die Ausgangssignale des Tief-Zwischenfrequenz-Umsetzers zz. nämlich das analoge Inphase-Signal i und das analoge Quadratur-Signal q sind mittels des ersten bzw. zweiten Analog-Digital-Umsetzers w1, w2 digitalisiert und bilden das digitale Inphase- bzw. digitale Quadratur-Signal id, qd. Selbstverständlich muß sichergestellt sein, daß die Digitalisierungsfrequenz gegenüber der Signalfrequenz hoch genug ist, wobei der erste und zweite analoge Tiefpaß tp1, tp2 als Antialias-Filter dienen. Die Güte der Vorselektion, die Kennlinie der beiden Hochfrequenzmischer und der Oberwellenanteil der beiden Konversionssignale muß dabei aufeinander abgestimmt sein, so daß keine störenden Mischungssignale innerhalb des Nutzbereiches entstehen.

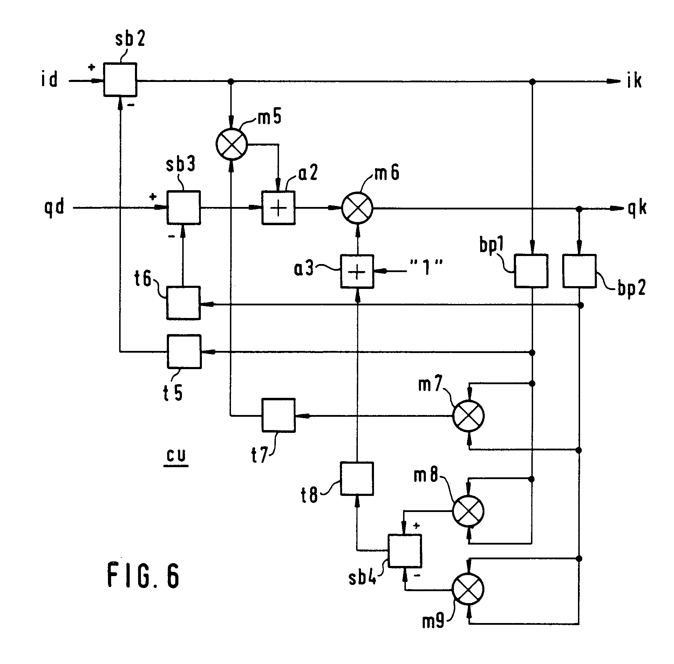

Trotz Digitalisierung ist die Bild- und Tonwiedergabe des Fernsehkanals noch nicht befriedigend, denn im analogen Tief-Zwischenfrequenz-Umsetzer zz sind bereits Verzerrungen im analogen Quadratur-Signalpaar i, q entstanden, die durch Digitalisierungsfehler in den beiden Analog-Digital-Umsetzern w1, w2 weiter vergrößert werden. Das digitale Quadratur-Signalpaar id, qd enthält somit Offset-, Phasen- und Amplitudenfehler, welche die Bild- und Tonwiedergabe beeinträchtigen. Der Beseitigung dieser Fehler dient die schematisch als Block angegebene Korrekturstufe cu, von der Fig. 6 als Beispiel ein ausführliches Blockschaltbild zeigt.

Aus der EP-A-0 237 590 (=ITT-case S. Mehrgardt 18 - US-S/N 07/022,833) ist beispielsweise eine andere Korrekturstufe für ein quadraturmoduliertes Signalpaar, das einen Fernsehkanal enthält, bekannt.

Die Ausgangssignale der Korrekturstufe cu sind das korrigierte Inphase-Signal ik und das korrigierte Quadratur-Signal qk, die beide der Video-Stufe vs und der Ton-Umsetzungsstufe ts als Eingangssignale zugeführt sind. Der Frequenzplan dieser Signale ist schematisch in Fig. 3 dargestellt. Durch die tiefzwischenfrequente Umsetzung erscheint das Nutzsignal dabei um 0 Hz gefaltet, so daß sich der Nutzsignalbereich etwa von 0 Hz bis 3,5 MHz erstreckt. Dieser Nutzsignalbereich wird in der Video-Stufe vs mittels des ersten und des zweiten Tiefpasses t1, t2 abgetrennt, deren Selektionsflanken für den tiefzwischenfrequenten Bildträger bt′ bei 2,6 MHz als Nyquistflanken ausgebildet sind und deren Steilheit dabei so gewählt ist, daß der tiefzwischenfrequente erste und zweite Tonkanal tk1′, tk2′ möglichst gut unterdrückt werden (der erste Tonkanal ist derjenige, der die kleinere Trägerfrequenz der beiden Tonkanäle hat).

An die beiden Tiefpässe t1, t2 schließt sich der Video-Demodulator vd an, der aus dem tiefpaßgefilterten Quadratur-Signalpaar das demodulierte Video-Signal ds erzeugt. Ein derartiger Demodulator für digitale Quadratur-Signalpaare ist beispielsweise in der US-A-40 90 145 beschrieben. Ferner ist in "IRE Transactions on Electronic Computers", September 1959, Seiten 330 bis 334 als "CORDIC"-Verfahren eine iterative Methode und eine entsprechende Schaltung beschrieben, die aus einem digitalen Quadratur-Signalpaar den Betrag und den Winkel des resultierenden Zeigers bestimmt und damit ebenfalls vorteilhaft als AM-Demodulator verwendbar ist.

Der Frequenzplan des demodulierten Video-Signals ds ist in Fig. 4 schematisch für den PAL-Farbfernsehstandard dargestellt. Der Videokanal erstreckt sich von 0 Hz bis etwa 5 MHz, mit dem Farbträger ft* bei 4,43 Mhz. Der erste und eventuell zweite Tonkanal bei 5,5 MHz bzw. 5,75 MHz sind durch die vorangehende Tiefpaßfilterung unterdrückt. Oberhalb der oberen Norm-Bandgrenze des Video-Signals bei 5,4 MHz ist in Fig. 4 dasjenige Störsignal ns bei 5,2 MHz eingezeichnet, das sich bei der Demodulation aus dem nicht vollständig unterdrückten Bildträger bt′ infolge restlicher Quadratur-Fehler ergibt. Die Mittenfrequenz dieses Störsignals ns ist dabei gleich der doppelten Frequenzablage des lokalen Oszillators os vom hochfrequenten Bildträger bt.

Mittels der in Fig. 4 schematisch dargestellten Selektionsflanke s des Entstörfilters nv kann dieses Störsignal ns ausreichend unterdrückt werden, ohne das Video-Signal zu beeinflussen. Das Ausgangssignal ist das FBAS-Signal fb, das der weiteren in Fig. 1 nicht gezeigten Signalverarbeitung zugeführt ist.

Die Tonverarbeitung der in Fig. 1 dargestellten Frequenzumsetzungsschaltung erfolgt in der Ton-Umsetzungsstufe ts. Diese enthält den ersten und den zweiten Tonkanalumsetzer tu1, tu2, die direkt mit dem korrigierten Quadratur-Signalpaar ik, qk gespeist sind. Dabei stellt der erste und der zweite Tonkanalumsetzer zusammen mit dem Tief-Zwischenfrequenz-Umsetzer zz jeweils einen Einseitenband-Umsetzer dar, wobei das korrigierte Quadratur-Signalpaar ik, qk mit jeweils einem weiteren in Quadratur stehenden Konversionssignalpaar nach der "Dritten Methode" (siehe Meinke, Gundlach: Taschenbach der Hochfrequenz technik, Springer-Verlag Berlin, 2. Auflage (1962), Seiten 1311-1313) umgesetzt wird. Der erste und zweite tiefzwischenfrequente Tonträger tt1′, tt2′ (vgl. Fig. 3) wird dabei von 2,9 MHz bzw. 3,15 MHz in eine wesentlich tiefere Frequenzlage, z.B. zwischen 0 und 200 kHz, transformiert. Mittels entsprechender Tiefpaßfilter wird der jeweilige Tonkanal herausgefiltert und im ersten bzw. zweiten Tondemodulator d1, d2 demoduliert. An diese schließt sich die Tonmatrix mx an, die als Ausgangssignal das rechte und das linke Tonsignal R, L als digitale Signale erzeugt.

Die beiden Tondemodulatoren d1, d2 bilden z.B. aus dem jeweiligen Quadratursignalpaar über einen Festwertspeicher (=ROM) mit einer gespeicherten Arcus-Tangens-Tabelle oder nach dem oben beschriebenen Cordic-Verfahren den zugehörigen Winkelwert und daraus durch Differenzierung, z.B. über einen digitalen Hochpaß, den jeweiligen demodulierten Tonkanal in digitaler Form.

Die bereits angesprochenen Figuren 2a und 2b enthalten das Frequenzschema des Hochfrequenzsignals hf, das als Kanalraster die verschiedenen Fernsehkanäle enthält. In Fig. 2a sind dabei der Fernsehkanal fk und sein oberer und unterer Nachbarkanal ok, uk schematisch dargestellt. Der Fernsehkanal fk enthält dabei den Videokanal vk mit dem Bildträger bt und dem Farbträger ft sowie den ersten und den zweiten Tonkanal tk1, tk2, deren Frequenzbereiche oberhalb des Videokanals vk liegen.

Um das Hochfrequenzsignalband gut auszunutzen, liegen die Fernsehkanäle dicht beieinander. Fig. 2b zeigt in größerem Maßstab den Fernsehkanal fk mit den sich daran anschließenden Nachbarkanälen, insbesondere deren Träger. Als Frequenzangaben sind dabei die Frequenzabstände zum Bildträger bt des zu empfangenden Fernsehkanals fk gewählt. Da es sich bei der Fernseh-Übertragung um eine Restseitenbandübertragung handelt, ist der vergrößerte Frequenzbereich des Videokanals vk durch die gestrichelte Linie am unteren Ende angedeutet. Dieser vom Sender ausgestrahlte Bereich erstreckt sich beim PAL-Farbfernsehstandard von etwa -1,5 MHz bis etwa 5 MHz. Die in Fig. 2b in Klammer angegebenen Frequenzwerte beziehen sich auf den NTSC-Farbfernsehstandard.

Für die Empfängerseite stellt die durchgezogene Linie des Videokanals vk das normgemäße Frequenzschema dar, und zwar zeigt es die Nyquistflanke nb für den Bildträger bt, die bei etwa -1 MHz die Nullinie trifft. Oberhalb des Videokanals liegen die Frequenzen des ersten bzw. des zweiten Tonträgers tt1, tt2 bei 5,5 MHz bzw. 5,75 MHz und schließlich bereits bei 7 MHz der oberen Nachbarbildträger ob des obere Nachbarkanals ok. Beim NTSC-Farbfernsehstandard entfällt derzeit der zweite Tonträger tt2. An die untere Normbandgrenze des Videokanals bei -1 MHz schließt sich der untere zweite bzw. erste Nachbartonträger ut2, ut1 bei -1,25 MHz bzw. -1,5 MHz an.

Die einzelnen Fernsehkanäle liegen somit im Hochfrequenzsignal hf ziemlich dicht beeinander, so daß steilflankige Selektionsmittel zur Trennung der einzelnen Kanäle und der einzelnen Komponenten notwendig sind. Besonders störend ist dabei der jeweils obere Nachbarbildträger ob, weil sein Pegel mit 40% der Kanalleistung ausgestrahlt wird. In Fig. 2b ist zusätzlich noch das erste und zweite Konversionssignal k1, k2 als strichpunktierte Linie bei 2,6 MHz (2,17 MHz für NTSC) eingezeichnet.

Die ebenfalls schon angesprochene Fig. 3 zeigt das Frequenzschema des analogen Quadratursignalpaares i, q, das aber auch dem des digitalisierten oder dem des korrigierten Quadratursignalpaares id, qd; ik, qk entspricht. Es zeigt innerhalb des gefalteten tiefzwischenfrequenten Videokanals vk′ den tiefzwischenfrequenten Farbträger ft′ und den tiefzwischenfrequenten Bildträger bt′ mit seiner gestrichelt gezeichneten Nyquistflanke nb′, deren Mitte beim PAL-Farbfernsehstandard bei 2,6 MHz liegt. Allerdings schneidet sie den ersten bzw. den zweiten tiefzwischenfrequenten Tonträger tt1′, tt2′ bei 2,9 MHz bzw. 3,15 MHz. Daher wird vorteilhafterweise die strichpunktierte eingezeichnete steilere Nyquistflanke nt′ als Selektionsflanke des ersten und zweiten Tiefpasses t1, t2 verwendet und somit der tiefzwischenfrequente erste und zweite Tonträger tt1′, tt2′ voll unterdrückt. Als Störgrößen sind in das Frequenzschema von Fig. 3 der tiefzwischenfrequente Nachbarbildträger nb′ des oberen Nachbarkanals bei etwa 4,4 MHz und der darüberliegende tiefzwischenfrequente erste bzw. zweite Nachbartonträger nt1′, nt2′ des unteren Nachbarkanals eingezeichnet.

Fig. 5 zeigt ein vorteilhaftes Ausführungsbeispiel des ersten Tonkanalumsetzers tu1, der den bei 2,9 MHz liegenden ersten tiefzwischenfrequenten Tonkanal tk1′ des korrigierten Quadratur-Signalpaares ik, qk in sein Basisband umsetzt, also eine Frequenzverschiebung um etwa 2,9 MHz in Richtung kleinerer Frequenzen bewirkt. Erfolgt die sich daran anschließende Demodulation z.B. nach dem Cordic-Verfahren, dann kann die Aufspaltung in die beiden Quadratur-Komponenten beibehalten werden. Da sowohl das korrigierte Inphase- als auch das korrigierte Quadratur-Signal ik, qk jeweils mit einem dritten und mit einem dazu in Quadratur stehenden vierten Konversionssignal k3, k4 umzusetzen sind, deren Frequenz etwa bei 2,9 MHz liegt, erfordert dies somit vier Multiplizierer m1 bis m4.

Die Frequenz dieser beiden Konversionssignale k3, k4 wird in einem Konversionssignalerzeuger g aus dem Systemtakt cl, z.B. durch möglichst ganzzahlige Frequenzteilung, gebildet. Dabei wirkt sich ein gemeinsamer Frequenzoffset auf das Cordic-Verfahren nicht störend aus.

Die Quadraturbildung des dritten und des vierten Konversionssignals erfolgt beispielsweise dadurch, daß ein invertiertes und ein nichtinvertiertes Signal von der doppelten Frequenz des Konversionssignals jeweils über einen einstufigen binären Frequenzteiler geführt ist. Die Ausgangssignale der beiden Frequenzteiler bilden sodann die beiden in Quadratur stehenden Konversionssignale k3, k4.

In Fig. 5 ist das korrigierte Inphase-Signal ik dem Signaleingang des ersten und des dritten Multiplizierers m1, m3 zugeführt, deren jeweiliger Modulationseingang mit dem dritten bzw. vierten Konversionssignal k3, k4 gespeist ist. Das korrigierte Quadratur-Signal qk ist jeweils dem Signaleingang des zweiten und des vierten Multiplizierers m2, m4 zugeführt, deren jeweiliger Modulationseingang mit dem vierten bzw. dritten Konversionssignal k4, k3 gespeist ist.

Der Ausgang des ersten und des zweiten Multiplizierers m1, m2 ist jeweils auf einen Eingang des ersten Addierers a1 geschaltet, dessen Ausgang mit dem Eingang des dritten Tiefpasses t3 verbunden ist.

Der Ausgang des dritten bzw. des vierten Multiplizierers m3, m4 ist mit dem Subtrahend- bzw. dem Minuend-Eingang des ersten Subtrahierers sb1 verbunden, dessen Ausgang den Eingang des vierten Tiefpasses t4 speist. Die am Ausgang des dritten Tiefpasses t3 abgegriffene Inphasekomponente des ersten Tonkanals it1 speist den Inphase-Eingang y des Koordinaten-Umsetzers kc, der beispielsweise nach dem Cordic-Verfahren arbeitet. Die am Ausgang des vierten Tiefpasses t4 abgegriffene Quadraturkomponente des ersten Tonkanals qt1 speist den Quadratur-Eingang z des Koordinaten-Umsetzers kc.

Da es sich bei den Tonkanälen um frequenzmodulierte Signale handelt, ist bei der Tonumsetzung lediglich derjenige Ausgang des Koordinaten-Umsetzers kc von Bedeutung, der den Winkel-Wert des jeweils zugeführten Quadratur-Signalpaares liefert. Dieser Winkel-Wert entspricht somit als Signal dem unteren nichtdemodulierten Tonkanal ut. Dieses Signal wird mittels des ersten Tondemodulators d1 demoduliert und bildet somit als Signal den unteren demodulierten Tonkanal ud.

Ein eventuell vorhandener zweiter Tonkanal wird mit einem identischen zweiten Tonkanalumsetzer tu2 umgesetzt, nur daß dabei die Frequenz des zugehörigen Konversionssignalpaares statt 2,9 MHz etwa 3,15 MHz aufweisen muß. Das Ausgangssignal dieses zweiten Tonkanalumsetzers tu2 mit dem zweiten Tondemodulator d2 ist der obere demodulierte Tonkanal od. Wie in Fig. 1 kann aus dem unteren und dem oberen demodulierten Tonkanal ud, od, mittels der Tonmatrix mx (vgl. Fig. 1) das rechte und das linke Tonsignal R, L gebildet werden.

Mit dem dritten bzw. dem vierten Tiefpaß t3, t4 soll der um 0 Hz gefaltete Tonkanal von störenden Nachbarsignalen befreit werden. Daraus ergibt sich ein Durchlaßbereich, der für beide Tiefpässe identisch sein muß und der etwa zwischen 0,1 MHz und 0,2 MHz liegt, da der Tonkanal immer noch frequenzmoduliert ist. In seiner Nachbarschaft befinden sich der obere Frequenzbereich des Videokanals, der eventuell vorhandene zweite Tonkanal im Abstand von 0,25 MHz und schließlich im Abstand von 0,3 MHz das durch den restlichen Bildträger bedingte Störsignal. Alle diese störenden Signale sind bei geeigneter Ausbildung der Tiefpaß-Selektionsflanke des dritten und vierten Tiefpasses t3, t4 unterdrückt.

Die Frequenzumsetzung im jeweiligen Tonkanalumsetzer tu1, tu2 läßt sich auch als Differenzfrequenzbildung ansehen, die nach den Regeln der trigonometrischen Umformung erfolgt. Und zwar findet dabei in den vier Multiplizierern m1,..m4 jeweils die Produktbildung zweier von vier trigonometrischen Funktionen statt und über eine addierende oder subtrahierende Koppelschaltung a1, sb1 sind jeweils zwei dieser Produkte zusammengefaßt. Bei geeigneter Produktbildung und geeigneter Koppelung stehen die Ausgangssignale der beiden Koppelschaltungen a1, sb1 somit wieder in Quadratur zueinander und die Frequenz ist die Differenzfrequenz.

Im einfachsten Fall enthalten die digitalen Konversionssignale k3, k4 nur die digitalen Werte 0, +1, -1, weil dann die vier Multiplizierer m1,... m4 auf einfachste Weise realisierbar sind. Die zugeführten korrigierten Quadratur-Signalpaare ik, qk müssen dann jeweils nur durchgeschaltet, in ihrem Wert invertiert oder auf null gesetzt werden. Die zweite Quadratur-Umsetzung vereinfacht sich somit erheblich.

In Fig. 6 ist als Blockschaltbild ein Ausführungsbeispiel der Korrekturstufe cu gezeigt. Sie enthält alle Teilschaltungen zur Korrektur des Offset-, des Phasen- und des Amplitudenfehlers sowie Teilschaltungen zur Bestimmung der jeweiligen Fehlergröße.

Das digitalisierte Inphase-Signal id speist den Minuend-Eingang des zweiten Subtrahierers sb2, dessen Ausgangssignal das korrigierte Inphase-Signal ik ist. Das digitalisierte Quadratur-Signal qd speist den Minuend-Eingang des dritten Subtrahierers sb3, der ebenso wie der zweite Subtrahierer der Offsetkorrektur dient.

Der Ausgang des dritten Subtrahierers sb3 liegt am Eingang des zweiten Addierers a2, der als Stelleinrichtung die Phasenkorrektur bewirkt, indem seinem anderen Eingang ein von der Inphase-Komponente abgeleitetes Korrektursignal zugeführt ist. Damit wird gleichsam das Quadratur-Signal in seiner Phase gedreht.

Das Ausgangssignal des zweiten Addierers a2 speist den ersten Eingang des sechsten Multiplizierers m6, dessen zweitem Eingang ein Korrektursignal zugeführt ist, das die Quadratur-Komponente in ihrem Wert vergrößert oder verkleinert. Das Ausgangssignal des sechsten Multiplizierers m6 ist das korrigierte Quadratur-Signal qk.

Da im tiefzwischenfrequenten Quadratur-Signalpaar ik, qk während der Zeit der Zeilen-Synchron-Impulse der tiefzwischenfrequente Bildträger bt′ unmoduliert enthalten ist, kann dieser mittels schmalbandiger Bandpässe herausgefiltert werden. Noch besser ist es, wenn die Bandpässe dabei nur während der Zeit des Zeilen-Synchron-Impulses über Schalter ansteuerbar sind. Offset-, Phasen- und Amplituden-Fehler lassen sich somit über die Quadraturfehler des herausgefilterten tiefzwischenfrequenten Bildträgers bt′ ermitteln. Im Ausführungsbeispiel der Fig. 6 erfolgt dies mittels des ersten bzw. des zweiten Bandpasses bp1, bp2, der am korrigierten Inphase- bzw. korrigierten Quadratur-Signal ik, qk angeschlossen ist. Bei einer Offsetfrequenz von 2,6 MHz für den lokalen Oszillator os liegt auch der Durchlaßbereich des ersten und zweiten Bandpasses bp1, bp2 bei 2,6 MHz.

Der Ausgang des ersten bzw. des zweiten Bandpasses bp1, bp2 wird über den fünften bzw. den sechsten Tiefpaß t5, t6 auf den Subtrahend-Eingang des zweiten bzw. dritten Subtrahierers sb2, sb3 geführt. Damit werden beide Offset-Fehler korrigiert.

Ein Phasenfehler ist dann vorhanden, wenn des Produkt aus Inphase- und Quadratur-Signal im Mittel einen Gleichwert enthält. Mittels des siebten Multiplizierers m7 und des daran angeschlossenen siebten Tiefpasses t7 ist diese Produktbildung und Mittelwertbildung durchgeführt. Der Ausgang des siebten Tiefpasses t7 speist dabei den einen Eingang des fünften Multiplizierers m5, dessen anderer Eingang mit dem Ausgang des zweiten Subtrahierers sb2 verbunden ist. Der Ausgang des fünften Multiplizierers m5 bildet die bereits angesprochene Inphase-Komponente, die mittels des zweiten Addierers a2 zur Quadratur-Komponente hinzuaddiert wird und die Phasendrehung bewirkt. Ist kein Phasenfehler vorhanden, so hat das Ausgangssignal des fünften Multiplizierers den Wert 0 und der zweite Addierer a2 verändert den Wert des Quadratur-Signals nicht.

In Fig. 6 findet der Amplitudenvergleich für die Amplitudenkorrektur dadurch statt, daß mittels des achten bzw. des neunten Multiplizierers m8, m9 das Ausgangssignal des ersten bzw. des zweiten Bandpasses bp1, bp2 quadriert wird. Statt dessen kann auch eine Gleichrichtung oder Betragsbildung vorgenommen werden.

Das Ausgangssignal des achten bzw. neunten Multiplizierers speist den Minuend- bzw. Subtrahend-Eingang des vierten Subtrahierers sb4, dessen Ausgang mittels des achten Tiefpasses t8 gefiltert ist. Der Ausgang dieses Tiefpasses t8 ist an einen Eingang des dritten Addierers a3 angeschlossen, dessen anderer Eingang mit dem digitalen Wert 1 gespeist ist und dessen Ausgang mit dem zweiten Eingang des sechsten Multiplizierers m6 verbunden ist.

Bei Amplitudengleichheit hat somit der dem sechsten Multiplizierer m6 zugeführte Korrekturfaktor den Wert 1, wodurch der sechste Multiplizierer m6 das zugeführte Quadratur-Signal nicht verändert. Wird statt des achten Tiefpasses t8 ein Integrator verwendet, dann wird dessen Ausgang direkt auf den sechsten Multiplizierer m6 geschaltet und der dritte Addierer a3 entfällt. Selbstverständlich sind alle Tiefpässe t5 bis t8 durch Integral- oder PDI-Regler ersetzbar.

Es ist zweckmäßig, im digitalen Verarbeitungsteil des Frequenzumsetzers den jeweiligen aus dem Systemtakt cl abgeleiteten Verarbeitungstakt an die jeweilige maximale Signalfrequenz anzupassen. Insbesondere bringt das in der Ton-Umsetzungsstufe ts Vorteile für die bei Realisierung als integrierte Schaltung erforderliche Kristallfläche der Filter. In der Video-Stufe vs liegt der Verarbeitungstakt über 10 MHz, während er in der Ton-Umsetzungsstufe ts für die demodulierten Ton-Ausgangssignale od, ud bis auf 32 kHz absenkbar ist.

## Patentansprüche

1. Frequenzumsetzungsschaltung für einen Farbfernsehkanal mit einem analogen Tief-Zwischenfrequenz-Umsetzer (zz), dem ein Hochfrequenzsignal (hf), das innerhalb des jeweiligen Fernsehkanals (fk) einen Video- sowie mindestens einen Tonkanal (vk, tk1, tk2) enthält, zugeführt ist und der mittels eines ersten und eines dazu in Quadratur stehenden zweiten Konversionssignals (k1, k2), deren Frequenz fest definiert innerhalb des zu empfangenden Fernsehkanals (fk) liegt, an seinem Ausgang ein analoges Quadratur-Signalpaar (i, q) erzeugt, das mittels eines ersten und eines zweiten Analog-Digital-Umsetzers (w1, w2) digitalisiert (id, qd) und mindestens einem Tonkanalumsetzer (tu1, tu2) sowie über einen ersten bzw. einen dazu gleichen zweiten Tiefpaß (t1, t2) einem Video-Demodulator (vd) zugeführt ist, wobei die beiden Tiefpässe (t1, t2) bezüglich des tief-zwischenfrequenten Bildträgers (bt') mit ihrer Selektionsflanke (nt') eine Nyquistflanke bilden,
gekennzeichnet durch folgende Merkmale:
- das digitalisierte Quadratursignalpaar (id, qd) ist mittels einer Korrekturstufe (cu), welche sich unmittelbar an den ersten und zweiten Analog-Digital-Umsetzer (w1, w2) anschließt, Offset-, Phasen- und Amplituden-korrigiert (ik, pk),
- die Frequenz des ersten und des zweiten Konversionssignals (k1, k2) liegt so in der Mitte zwischen dem Bildträger (bt) und der Mitte zwischen der oberen Norm-Bandgrenze des Videokanals (vk) und der unteren Norm-Bandgrenze des unteren Tonkanals (tk1), daß Bildträgerreste in den signalfreien Frequenzbereich zwischen der oberen Norm-Bandgrenze des Videokanals (vk) und der unteren Bandgrenze des unteren Tonkanals (tk1) fallen,
- die Steilheit der Selektionsflanke (nt') ist derart, daß der tiefzwischenfrequente Tonkanal (tk1') unterdrückt ist,
- dem Video-Demodulator (vd) ist ein Entstörfilter (nv) nachgeschaltet, das beim doppelten Frequenzwert des tiefzwischenfrequenten Bildträgers (bt') eine hohe Sperrwirkung aufweist und
- in einer Ton-Umsetzstufe (ts) mit mindestens einem Tonkanalumsetzer (tu1,tu2), der zusammen mit dem Tief-Zwischenfrequenz-Umsetze (zz) einen Einseitenbandumsetzer nach der "Dritten Methode", bildet, erfolgt die Demodulation des Tonkanals (tk1, tk2).

2. Frequenzumsetzungsschaltung nach Anspruch 1, dadurch gekennzeichnet, daß im jeweiligen Tonkanalumsetzer (tu1, tu2),
- zur Bildung einer Inphasekomponente (it1) des umgesetzten Tonkanals (tk1, tk2) das korrigierte Quadratur-Signalpaar (ik, qk) mittels eines dritten und eines dazu in Quadratur stehenden vierten Konversionssignals (k3, k4) sowie mittels eines ersten und eines zweiten Multiplizierers (m1, m2) in ein niederes Frequenzband umgesetzt, mittels einer ersten Koppelschaltung (a1) zusammengefaßt und über einen dritten Tiefpaß (t3) geführt ist,
- zur Bildung einer Quadraturkomponente (qt1) des umgesetzten Tonkanals (tk1, tk2) das korrigierte Quadratur - Signalpaar (ik, qk) mittels des dritten und des vierten Konversionssignals (k3, k4) sowie mittels eines dritten und eines vierten Multiplizierers (m3, m4) in einen niederes Frequenzband umgesetzt, mittels einer zweiten Koppelschaltung (sb1) zusammengefaßt und über einen vierten Tiefpaß (t4) geführt ist,
- die Frequenz des dritten und vierten Konversionssignals (k3, k4) der Frequenz des jeweiligen tiefzwischenfrequenten Tonträgers (tt1', tt2') entspricht und
- der Durchlaßbereich des dritten und des vierten Tiefpasses (t3, t4) höchstens gleich der Bandbreite des jeweiligen Tonkanals (tk1, tk2) ist.

3. Frequenzumsetzungsschaltung nach Anspruch 2, gekennzeichnet durch folgende Merkmale:
- das dritte bzw. das vierte Konversionssignal (k3, k4) weist einen cosinus- bzw. einen sinusförmigen Signalverlauf auf,
- das korrigierte Inphase-Signal (ik) ist jeweils dem einen Eingang des ersten bzw. dritten Multiplizierers (m1, m3) zugeführt, dessen anderer Eingang mit dem dritten bzw. mit dem vierten Konversionssignal (k3, k4) gespeist ist,
- das korrigierte Quadratur-Signal (qk) ist jeweils dem einen Eingang des zweiten bzw. des vierten Multiplizierers (m2, m4) zugeführt, dessen anderer Eingang mit dem vierten bzw. mit dem dritten Konversionssignal (k4, k3) gespeist ist,
- die Ausgänge des ersten und des zweiten Multiplizierers (m1, m2) sind jeweils mit einem Eingang eines ersten Addierers (a1) verbunden, dessen Ausgang am Eingang des dritten Tiefpasses (t3) liegt und
- der Ausgang des vierten bzw. des dritten Multiplizierers (m4, m3) ist mit dem Minuend-Eingang bzw. mit dem Subtrahend-Eingang eines ersten Subtrahierers (sb1) verbunden, dessen Ausgang am Eingang des vierten Tiefpasses (t4) liegt.

4. Frequenzumsetzungsschaltung nach Anspruche 2 oder 3, dadurch gekennzeichnet, daß das dritte und vierte Konversionssignal (k3, k4) jeweils nur die digitalen Werte 0, -1, +1 umfaßt und daß die zugehörigen Multiplizierer (m1, ...m4) den jeweils zugeführten Wert des korrigierten Quadratur-Signalpaares (ik, qk) entweder als invertierten oder als unveränderten oder als auf null gesetzten Wert abgeben.

5. Frequenzumsetzungsschaltung nach einem der Ansprüche 2 bis 4, dadurch gekennzeichnet, daß der Ausgang des dritten bzw. des vierten Tiefpasses (t3, t4) mit dem Inphase- bzw. mit dem Quadratur-Eingang (y, z) eines zweiten Koordinaten-Umsetzers (kc) verbunden ist, der als Ausgangssignal den Winkel-Wert des jeweiligen resultierenden Zeigers bildet.

6. Frequenzumsetzungsschaltung nach Anspruch 1, dadurch gekennzeichnet, daß der Video-Demodulator (vd) ein erster Koordinaten-Umsetzer ist, der als Ausgangssignal den Betrag des jeweiligen resultierenden Zeigers bildet.

## Claims

1. A frequency conversion circuit for a color television channel comprising an analog low-IF converter (zz) which is fed with an RF signal (hf) containing a video channel (vk) and at least one sound channel (tk1, tk2) within the respective television channel (fk), and which, by means of a first conversion signal (k1) and a second conversion signal (k2) in quadrature therewith, whose frequencies are fixed and lie within the television channel (fk) to be received, generates at its output an analog quadrature-signal pair (i, q) which is digitized (id, qd) by means of a first analog-to-digital converter (w1) and a second analog-to-digital converter (w2) and fed to at least one sound channel converter (tu1, tu2) and, through a first low-pass filter (t1) and an identical second low-pass filter (t2), to a video detector (vd), with the skirts (nt') of the two low-pass filters (t1, t2) being Nyquist skirts with respect to the low-IF picture carrier (bt'),
characterized by the following features:
- The digitized quadrature-signal pair (id, qd) is offset-, phase-, and amplitude-corrected (ik, qk) by means of a correcting stage (cu) which succeeds the first and second analog-to-digital converters (w1, w2);
- the frequency of the first and second conversion signals (k1, k2) lies in the middle between the picture carrier (bt) and the center between the upper standard band limit of the video channel (vk) and the lower standard band limit of the lower sound channel (tk1), such that picture-carrier residues fall into the signal-free frequency range between the upper standard band limit of the video channel (vk) and the lower band limit of the lower sound channel (tk1);
- the slope of the skirt (nt') is such that the low-IF sound channel (tk') is suppressed;
- the video detector (vd) is followed by an interference suppression filter (nv) having high attenuation at twice the frequency value of the low-IF picture carrier (bt'), and
- in a sound conversion stage (ts) comprising at least one sound channel converter (tu1, tu2), which together with the low-IF converter (zz) forms a single-sideband converter using the "third method", demodulation of the sound channel (tk1, tk2) is effected.

2. A frequency conversion circuit as claimed in claim 1, characterized in that in the respective sound channel converter (tu1, tu2),
- an in-phase component (it1) of the converted sound channel (tk1, tk2) is formed by converting the corrected quadrature-signal pair (ik, qk) to a lower frequency band by means of a third conversion signal (k3) and a fourth conversion signal (k4) in quadrature with the third conversion signal (k3) and by means of a first multiplier (m1) and a second multiplier (m2), by combining the outputs of the first and second multipliers (m1, m2) by means of a first combining circuit (a1), and by passing the output of the first combining circuit (a1) through a third low-pass filter (t3),
- a quadrature component (qt1) of the converted sound channel (tk1, tk2) is formed by converting the corrected quadrature-signal pair (ik, qk) to a lower frequency band by means of the third and fourth conversion signals (k3, k4) and by means of a third multiplier (m3) and a fourth multiplier (m4), by combining the outputs of the third and fourth multipliers (m3, m4) by means of a second combining circuit (sb1), and by passing the output of the second combining circuit (sb1) through a fourth low-pass filter (t4),
- the frequency of the third and fourth conversion signals (k3, k4) is approximately equal to the frequency of the respective low-IF sound carrier (tt1', tt2'), and
- the passband of the third and fourth low-pass filters (t3, t4) is not wider than the bandwidth of the respective sound channel (tk1, tk2).

3. A frequency conversion circuit as claimed in claim 2, characterized by the following features:
- The third and fourth conversion signals (k3, k4) are a cosine wave and sine wave, respectively;
- the corrected in-phase signal (ik) is applied to one input of the first multiplier (m1), whose other input is fed with the third conversion signal (k3), and to one input of the third multiplier (m3), whose other input is fed with the fourth conversion signal (k4);
- the corrected quadrature signal (qk) is applied to one input of the second multiplier (m2), whose other input is fed with the fourth conversion signal (k4), and to one input of the fourth multiplier (m4), whose other input is fed with the third conversion signal (k3);
- the outputs of the first and second multipliers (m1, m2) are each connected to one input of a first adder (a1) having its output coupled to the input of the third low-pass filter (t3), and
- the outputs of the fourth and third multipliers (m4, m3) are connected to the minuend input and the subtrahend input, respectively, of a first subtracter (sb1) having its output coupled to the input of the fourth low-pass filter (t4).

4. A frequency conversion circuit as claimed in claim 2 or 3, characterized in that the third and fourth conversion signals (k3, k4) can only have the digital values 0, -1, +1, and that the associated multipliers (m1, ..., m4) deliver the applied value of the corrected quadrature-signal pair (ik, qk) as an inverted or unchanged value or as a value set to zero.

5. A frequency conversion circuit as claimed in any one of claims 2 to 4, characterized in that the outputs of the third and fourth low-pass filters (t3, t4) are connected to the in-phase input (y) and quadrature input (z), respectively, of a second resolver (kc) which produces an output equal to the angular value of the respective resultant.

6. A frequency conversion circuit as claimed in claim 1, characterized in that the video detector (vd) is a first resolver which produces an output equal to the magnitude of the respective resultant.

## Revendications

1. Circuit de conversion de fréquence pour un canal de télévision en couleurs comportant un convertisseur analogique à basse fréquence intermédiaire (zz), auquel est envoyé un signal à haute fréquence (hf), qui contient, à l'intérieur du canal de télévision respectif (fk), un canal vidéo ainsi qu'au moins un canal son (vk,tk1,tk2), et qui produit à sa sortie, au moyen d'un premier signal de conversion (k1) et d'un second signal de conversion (k2) en quadrature avec le premier, signaux dont la fréquence est définie de façon fixe à l'intérieur du canal de télévision (fk) devant être reçu, un couple analogique de signaux en quadrature (i,q), qui est numérisé (id,qd) au moyen d'un premier et d'un second convertisseurs analogique/numérique (w1,w2) et est envoyé, au moins à un convertisseur du canal son (tu1,tu2) ainsi que, par l'intermédiaire d'un premier filtre passe-bas (t1) et d'un second filtre passe-bas (t2) identique au précédent, à un démodulateur vidéo (vd), les deux filtres passe-bas (t1,t2) formant en rapport avec la porteuse image (bt') à basse fréquence intermédiaire, avec leur flanc de sélection (nt') un flanc de Nyquist, caractérisé par les caractéristiques suivantes :
- le couple numérisé de signaux en quadrature (id, qd) est corrigé (ik, pk) du point de vue décalage, phase et amplitude, au moyen d'un étage de correction (cu), qui est raccordé directement aux premier et second convertisseurs analogique/numérique (w1,w2),
- la fréquence des premier et second signaux de conversion (k1,k2) est disposée en position médiane entre la porteuse image (bt) et la position médiane entre la limite supérieure de bande normalisée du signal vidéo (bk) et la limite inférieure de bande normalisée du canal son inférieur (tk1), de sorte que des restes de la porteuse image se situent dans la gamme de fréquences, qui ne comporte pas de signaux, entre la limite supérieure de bande normalisée du signal vidéo (vk) et la limite inférieure de la bande du canal son inférieur (tk1),
- la pente du flanc de sélection (nt') est telle que le canal son à basse fréquence intermédiaire (tk1') est supprimé,
- en aval du démodulateur vidéo (vd) est branché un filtre d'antiparasitage (nv), qui possède une action de blocage intense pour une fréquence double de la fréquence de la porteuse image à basse fréquence intermédiaire (vt'), et
- la démodulation du canal son (tk1,tk2) s'effectue dans un étage de conversion du son (ts) comportant au moins un convertisseur (tu1,tu2) du canal son, qui forme, conjointement avec le convertisseur à basse fréquence intermédiaire (zz), un convertisseur de bande latérale unique conformément à la "troisième méthode".

2. Circuit de conversion de fréquence selon la revendication 1, caractérisé en ce que dans le convertisseur respectif du canal son (tu1,tu2)
- pour la formation d'une composante en phase (it1) du canal son converti (tk1,tk2), le couple corrigé de signaux en quadrature (tk,qk) est amené par conversion dans une bande de fréquences plus basses au moyen d'un troisième signal de convertion (k3) et d'un quatrième signal de conversion (k4) en quadrature avec le précédent, ainsi qu'au moyen de premier et second multiplicateurs (m1,m2), est assemblé au moyen d'un circuit de couplage (a1) et traverse un troisième filtre passe-bas (t3),
- pour la formation d'une composante en quadrature (qt1) du canal son converti (tk1,tk2), le couple corrigé de signaux en quadrature (ik,uk) est amené par conversion dans une bande de fréquences plus basses au moyen des troisième et quatrième signaux de conversion (k3,k4) ainsi qu'au moyen de troisième et quatrième multiplicateurs (m3,m4), est assemblé au moyen d'un second circuit de couplage (sp1) et traverse un quatrième filtre passe-bas (t4),
- la fréquence des troisième et quatrième signaux de conversion (k3,k4) correspond à la fréquence de la porteuse son respective à basses fréquences intermédiaire (t1',t2'), et
- la bande passante des troisième et quatrième filtres passe-bas (t3,t4) est égale au maximum à largeur de bande du canal son respectif (tk1,tk2).

3. Circuit de conversion de fréquence selon la revendication 2, caractérisé par les caractéristiques suivantes :
- les troisième et quatrième signaux de conversion (k3,k4) possèdent respectivement une variation en cosinus et une variation en sinus.
- le signal en phase corrigé (ik) est envoyé respectivement à une entrée du premier ou troisième multiplicateur (m1,m3), dont l'autre entrée reçoit le troisième ou le quatrième signal de conversion (k3,k4),
- le signal corrigé en quadrature (qk) est envoyé respectivement à une entrée du second ou du quatrième multiplicateur (m2,m4), dont l'autre entrée est alimentée par le quatrième ou le troisième signal de conversion (k4,k3),
- les sorties des premier et second multiplicateurs (m1,m2) sont raccordées respectivement à une entrée d'un premier additionneur (a1), dont la sortie est raccordée à l'entrée du troisième filtre passe-bas (t3), et
- la sortie du quatrième ou du troisième multiplicateur (m4,m3) est raccordée à l'entrée du minuende ou à l'entrée du nombre à soustraire d'un soustracteur (sb1), dont la sortie est raccordée à l'entrée du quatrième filtre passe-bas (t4).

4. Circuit de conversion de fréquence suivant la revendication 2 ou 3, caractérisé par le fait que les troisième et quatrième signaux de conversion (k3,k4) comprennent respectivement seulement les valeurs binaires (0,-1,+1) et que les multiplicateurs associés (m1,...m4) délivrent la valeur respectivement envoyée du couple corrigé de signaux en quadrature (ik,qk) soit sous la forme d'une valeur inversée, soit sous la forme d'une valeur inchangée, soit sous la forme d'une valeur positionnée à zéro.

5. Circuit de conversion de fréquence suivant l'une des revendications 2 à 4, caractérisé en ce que la sortie du troisième ou du quatrième filtre passe-bas (t3,t4) est raccordée à l'entrée en phase ou à l'entrée en quadrature (y,z) d'un second convertisseur de coordonnées (kc), qui forme, en tant que signal de sortie, la valeur angulaire du vecteur résultant respectif.

6. Circuit de conversion de fréquence suivant la revendication 1, caractérisé en ce que le démodulateur vidéo (vd) est un premier convertisseur de coordonnées, qui fournit en tant que signal le module du vecteur résultant respectif.
